# EUROPEAN PATENT APPLICATION

(11) **EP 4 534 364 A1**
(43) Date of publication of application: **09.04.2025**
(21) Application number: 23811086.0
(22) Date of filing: 24.05.2023
(51) Int. Cl.: B60R 22/18, B60R 22/30

(54) **SEAT BELT END CLOSING DEVICE AND VEHICLE HAVING SAME**

(30) Priority: 27.05.2022 CN 202221316970 U
(71) Applicant: BYD Company Limited, Shenzhen, Guangdong 518118 (CN)
(72) Inventor: LIU, Ruyi, Shenzhen, Guangdong 518118 (CN); WANG, Yanrong, Shenzhen, Guangdong 518118 (CN); WANG, Yibo, Shenzhen, Guangdong 518118 (CN)
(74) Representative: Mathys & Squire
(86) International application number: PCT/CN2023/095976
(87) International publication number: WO 2023/227016

(57) **Abstract**

A seat belt end closing device and a vehicle having same. The seat belt end closing device includes a latch plate (10), a shell (20) and a locking piece (32); the latch plate (10) is provided with a snap-fit notch (10a), and is suitable for connecting to an end of a seat belt; a latch plate channel (20a) suitable for the latch plate (10) to extend into is defined in the shell (20); the locking piece (30) includes two positioning plates (31) and a locking piece (32) connected to the two positioning plates; the locking piece (30) is provided on the housing (20) and is movable between a locking position and a release position; when the locking piece (30) is at the locking position and the latch plate (10) extends into the latch plate channel (20a), the locking plate is snap-fitted in the snap-fit notch (10a); when the locking piece (30) is at the release position, the locking plate relieves the latch plate (10); and the two positioning plates (31) are both in sliding fit with the shell (20).

## Description

### CROSS-REFERENCE TO RELATED APPLICATIONS

The present application is based on and claims priority to Chinese Patent Application No. 2022213169709 filed on May 27, 2022, the entire contents of which are incorporated herein by reference.

### FIELD

The present application relates to the field of vehicles, in particular to a seat belt end closing device and a vehicle having the same.

### BACKGROUND

In the related art, a vehicle is provided with a seat belt for protecting the riding safety of a user, the seat belt restrains a human body and can be tensioned to counteract an inertial force of the human body when the vehicle collides, thereby protecting the user, and the end of the seat belt is connected with a tensioner through a closing device.

In the seat belt end closing device in the related art, the latch plate is locked or released by the rotation of the locking element, but the stability of the locking element is poor, and the seat belt is easy to fall off when the vehicle meets extreme conditions, so that the reliability of the end closing device is affected.

### SUMMARY

The present application aims to solve at least one of the technical problems existing in the prior art. To this end, it is an object of the present application to propose a seat belt end closing device. The seat belt end closing device designed according to the present application has a stable structure, good protection effect for users, flexible and convenient installation, and is firm.

The present application also provides a vehicle with the seat belt end closing device.

The seat belt end closing device according to the present application includes : a latch plate, provided with a snap-fit notch, the latch plate being adapted to connect to an end part of the seat belt; a shell, defining therein a latch plate channel, the latch plate channel being adapted for the latch plate to extend into; a locking piece, comprising two positioning plates and a locking plate connecting the two positioning plates, the locking piece being movably arranged on the shell between a locking position and a release position, the locking plate being snap-fitted in the snap-fit notch when the locking piece is in the locking position and the latch plate extends into the latch plate channel, the locking plate avoiding the latch plate when the locking piece is in the release position, the two positioning plates being in sliding fit with the shell.

According to the positioning plate provided on the locking piece of the seat belt end closing device, compared with the seat belt end closing device in the related art, the contact area between the locking piece and the shell can be increased, so that the positioning effect of the locking piece is better, and the locking piece is prevented from separating from the shell, and the structure of the seat belt end closing device is stable, and the protection effect on a user is good.

According to some embodiments of the present application, the positioning plates are perpendicular to the locking plate and the two positioning plates extend in a same direction from the locking plate.

According to some embodiments of the present application, the positioning plates are perpendicular to the locking plate and the two positioning plates extend from the locking plate in opposite directions.

According to some embodiments of the present application, one side surface of the positioning plate away from the locking plate includes a first slope segment which is inclined to the surface of the locking plate. In the locking position, the angle a1 between the first slope segment and the insertion direction of the latch plate is smaller than the angle a2 between the surface of the locking plate and the insertion direction of the latch plate.

According to some embodiments of the present application, the positioning plate is constructed in a shape gradually protruding from two ends to the center, so that one side surface of the positioning plate away from the locking plate includes two slope segments which are symmetrically provided, and one of the slope segments is the first slope segment.

According to some embodiments of the present application, the two positioning plates have the same shape.

According to some embodiments of the present application, the shell includes two shell plates and a connecting plate connecting the two shell plates, the latch plate channel is formed at the inner sides of the two shell plates and the connecting plate, each of the two shell plates is provided with a limiting groove penetrating through the shell plate along the thickness direction, the locking plate is rotatablely fitted in the limiting groove, the locking piece passes through the two limiting grooves, and the inner surfaces of the two positioning plates are respectively in sliding fit with the outer surfaces of the two shell plates.

According to some embodiments of the present application, the positioning plates are configured to be always in sliding contact with the two shell plates during the movement of the locking piece.

According to some embodiments of the present application, the limiting groove is a fan-shaped groove, and the locking plate is respectively fitted with the arc-shaped edges of the two limiting grooves.

According to some embodiments of the present application, the seat belt end closing device further includes a safety piece, the safety piece being provided with a stopping groove, the safety piece being rotatablely provided on the shell between a stopping position and an avoiding position, the locking piece being disengaged from the stopping groove when the safety piece is in the avoiding position to allow the locking piece to move, and the locking piece being fitted in the stopping groove when the safety piece is in the stopping position to prevent the locking piece from moving.

According to some embodiments of the present application, the seat belt end closing device further includes an elastic piece, the elastic piece being deformable between a compression state and a reset state, the elastic piece being connected to the safety piece, the elastic piece abutting against the locking piece in the reset state to drive the safety piece to move to the avoiding position, the elastic piece always driving the safety piece to rotate to the stopping position in the compression state, the elastic piece being pressed to the compression state by the latch plate after the latch plate is inserted into the latch plate channel and being reset to the reset state after the latch plate is disengaged from the latch plate channel.

According to some embodiments of the present application, the positioning plate has a length of 8-14 mm and a width of 8-14 mm.

According to some embodiments of the present application, the seat belt end closing device further includes a connecting piece arranged on the shell and is configured to be connected to a seat belt tensioner.

A vehicle according to another embodiment of the present application is briefly described below.

The vehicle according to the present application includes the seat belt end closing device described in any one of the above embodiments, and because the vehicle according to the present application is provided with the seat belt end closing device of the embodiment, the vehicle has good protection effect on users, stable overall structure and can ensure the use safety of the users.

To sum up, the seat belt end closing device of the present application designs the locking piece into a structure that the two sides of the locking plate are connected with the positioning plates, so that the contact area between the locking piece and the shell can be increased, so that the positioning effect of the locking piece is better. In addition, the seat belt end closing device has a simple structure, low cost, good positioning effect on the seat belt, flexible and convenient installation of the seat belt, and is firm.

Additional aspects and advantages of the present application will be set forth in part in the description which follows, and in part will be obvious from the description, or may be learned by practice of the present application.

### BRIEF DESCRIPTION OF THE DRAWINGS

The foregoing and / or additional aspects and advantages of the present application will become apparent and readily understood from the description of embodiments taken in conjunction with the following drawings, in which:
FIG. 1 is an exploded view of a seat belt end closing device according to an embodiment of the present application.
FIG. 2 is a structural diagram of a shell according to an embodiment of the present application.
FIG. 3 is a structural diagram of a locking piece according to an embodiment of the present application.
FIG. 4 is a structural diagram of a locking piece according to an embodiment of the present application.
FIG. 5 is a structural diagram of a locking piece according to another embodiment of the present application.
FIG. 6 is a structural diagram of a locking piece according to another embodiment of the present application.
FIG. 7 is a locked position diagram of a seat belt end closing device according to an embodiment of the present application.
FIG. 8 is a release position diagram of a seat belt end closing device according to an embodiment of the present application
FIG. 9 is a schematic diagram of a vehicle according to an embodiment of the present application.

Reference numerals:
seat belt end closing device 1; latch plate 10; snap-fit notch 10a; insertion direction F1; shell 20; latch plate channel 20a; shell plate 21; limiting groove 21a; a connecting plate 22; locking piece 30; positioning plate 31; first slope segment 311; second slope segment 312; locking plate 32; safety piece 40; stopping groove 40a; elastic piece 50; connecting piece 60; seat belt 70; fastener 80; opening piece 90; vehicle 100; seat belt tensioner 2.

### DETAILED DESCRIPTION

The present application is based on the inventors' discovery and awareness of the following facts and problems:
In the seat belt end closing device in the related art, the latch plate is locked or released by the rotation of the locking element, but the stability of the locking element is poor, and the seat belt end closing device is easy to be disengaged when a vehicle meets extreme conditions, so that the reliability of the end closing device is influenced.

Specifically, the locking element of the seat belt end closing device in the related art is positioned by matching the anchoring surfaces formed by a plurality of protrusions with the metal plate of the shell, but the contact surface of the anchoring surface formed by the protrusions and the metal plate is small, the positioning effect is poor, and the locking element is liable to fall off under extreme conditions.

Embodiments of the present application are described in detail below, examples of which are illustrated in the drawings in which the same or similar reference numerals designate the same or similar elements or elements having the same or similar functions throughout. The embodiments described below with reference to the drawings are exemplary only for the purpose of explaining the present application and are not to be construed as limiting the present application.

In the description of the present application, it is to be understood that the terms "center", "vertical", "horizontal", "length", "width", "thickness" and "up", "down", "before" and "after", "left", "right" and "vertical", "level", "top", "bottom" "within" and "outside", "clockwise", "counterclockwise "and the like indicate an orientation or position relations based on the orientation or position relations shown in the drawings, and are merely for purposes of describing the present application and simplifying the description, but are not intended to indicate or imply that the referenced device or element must have a particular orientation, constructed and operated in a particular orientation, and therefore should not be construed as limiting the present application.

Furthermore, the terms "first" and "second" are used for descriptive purposes only and are not to be understood as indicating or implying a relative importance or implicitly indicating the number of technical features indicated. Thus, a feature defined with "first", "second" may explicitly or implicitly include one or more such features. In the description of the present application, "plurality" means at least two, such as two, three, etc., unless explicitly and specifically defined otherwise.

In the present application, unless explicitly defined and limited to the contrary, the terms "mounted", "connected", "connected" ,"fixed" and the like are to be construed broadly, e.g., fixedly attached, removably attached, or integral; can be mechanically connected or electrically connected or can communicate with each other; can be directly connected, also can be indirectly connected through an intermediate medium, and can be the internal communication of two elements or the interaction relationship of two elements. the specific meaning of the above terms in the present application may be understood by those of ordinary skill in the art according to specific circumstances.

In the present application, unless expressly stated and defined otherwise, the first feature "above" or "below" the second feature may include the first and second features being in direct contact, or the first and second features being not in direct contact but being in contact with another feature there between. In addition, that first feature "on", "above" and" over" the second feature include the first feature directly above and diagonally above the second feature, or simply means that the first feature is horizontally higher than the second feature. The first feature "below", "under" and "underneath" the second feature includes the first feature directly below and obliquely below the second feature, or simply means that the first feature is horizontally lower than the second feature.

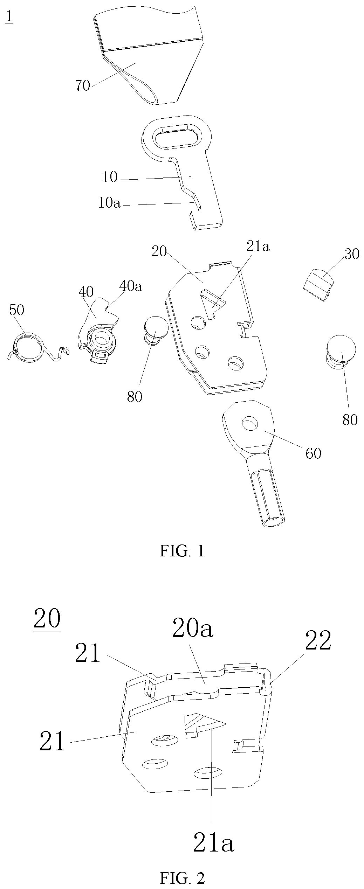

A seat belt end closing device 1 according to an embodiment of the present application is described below with reference to FIGS. 1 to 8.

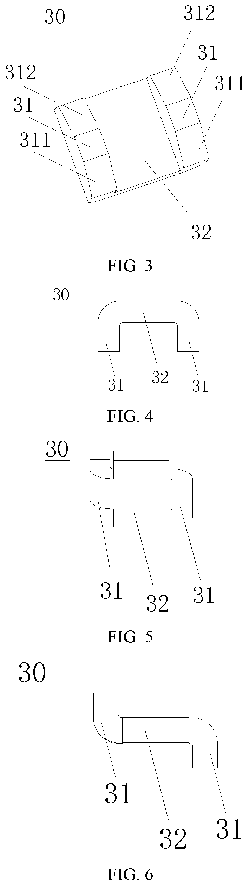

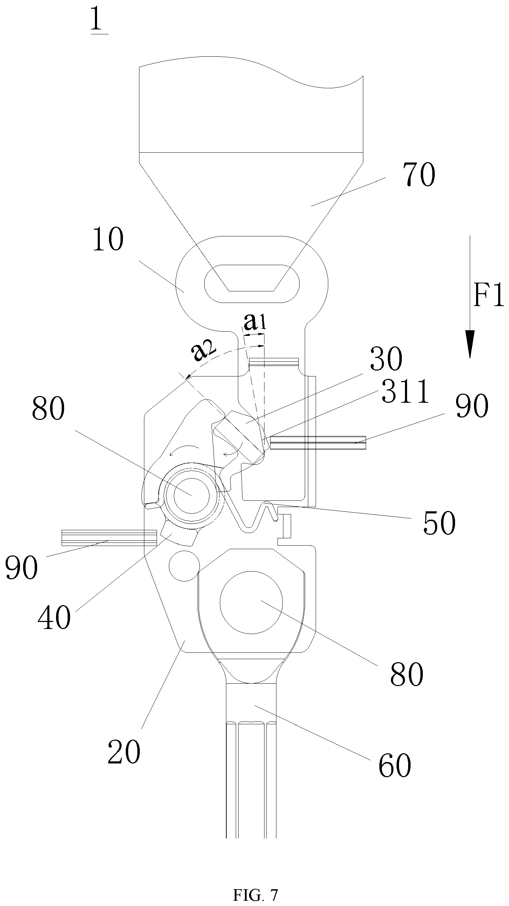

As shown in FIG. 1, a seat belt end closing device 1 according to the present application includes a latch plate 10, a shell 20, and a locking piece 30. The latch plate 10 is provided with a snap-fit notch 10a, and the latch plate 10 is suitable for being connected with the end part of the seat belt 70; Referring to FIG. 2, a latch plate channel 20a is defined in the shell 20 for the latch plate 10 to extend; Referring to FIG. 3, the locking piece 30 includes two positioning plates 31 and a locking plate 32 connecting the two positioning plates 31. The locking piece 30 is movably provided on the shell 20 between a locking position and a release position. When the locking piece 30 is in the locking position (e.g., the position shown in FIG. 7) and the latch plate 10 extends into the latch plate channel 20a, the locking plate 32 engages in the snap-fit notch 10a. When the locking piece 30 is in the release position, the locking plate 32 avoids the latch plate 10. The two positioning plates 31 are slidably engaged with the shell 20.

Illustratively, the latch plate 10 extends into the latch plate channel 20a to guide the attachment of the seat belt 70 to the shell 20. The locking piece 30 is engageable with the snap-fit notch 10a on the latch plate 10 to fix the seat belt 70 to the shell 20, and the locking piece 30 is movable between a locking position and a release position to fix or release the seat belt 70. The locking piece 30 has a locking plate 32 which can be engaged with the snap-fit notch 10a of the latch plate 10 to fix the seat belt 70 to the shell 20. The locking plate 32 is connected with two positioning plates 31. The positioning plates 31 are in sliding fit with the shell 20 and limit the moving direction of the locking piece 30 to prevent the locking piece 30 from moving obliquely.

According to the present application, the positioning plate 31 is provided on the locking piece 30 of the seat belt end closing device 1, so that the contact area of the locking piece 30 and the shell 20 can be increased compared with the seat belt end closing device in the related art, so that the positioning effect of the locking piece 30 is better, and the locking piece 30 is prevented from being disengaged from the shell 20, and the structure of the seat belt end closing device 1 is stable, and the user protection effect is good.

According to some embodiments of the present application, as shown in FIGS. 3-4, the positioning plate 31 is perpendicular to the locking plate 32 and the two positioning plates 31 extend in the same direction from the locking plate 32, such that the two positioning plates 31 protrude from the same side surface of the locking plate 32 along the same side in the thickness direction of the locking plate 32. Illustratively, the cross-section of the locking piece 30 may be generally C-shaped. The positioning plate 31 extending in the same direction can always be in sliding contact with the shell 20 during the moving process of the locking piece 30, so as to ensure that the locking piece 30 does not tilt laterally during the moving process and ensure the working stability of the locking piece 30.

According to other embodiments of the present application, as shown in FIGS. 5-6, the positioning plate 31 is perpendicular to the locking plate 32, and the two positioning plates 31 extend in opposite directions from the locking plate 32, so that the two positioning plates 31 protrude from both side surfaces of the locking plate 32 along both sides of the thickness direction of the locking plate 32. Illustratively, the cross-section of the locking piece 30 may be generally S-shaped. The positioning plate 31 extending in the opposite direction can keep the locking piece 30 smoothly moving during the movement of the locking piece 30, thereby ensuring the working stability of the locking piece 30.

According to some embodiments of the present application, the two positioning plates 31 have the same shape as shown in FIGS. 3 and 4, or the two positioning plates 31 have the same shape as shown in FIGS. 5 and 6, thereby facilitating design and machining and facilitating multi-angle mounting of the locking piece 30.

For example, as shown in FIGS. 3 and 4, when the positioning plate 31 is perpendicular to the locking plate 32 and the two positioning plates 31 extend in the same direction from the locking plate 32, if the two positioning plates 31 have the same shape, after the locking piece 30 is rotated 180 degrees around the axis passing through the center of the locking plate 32 and extending along the thickness direction of the locking plate 32, the configuration is the same as that before the rotation, so that the mounting of the locking piece 30 can also be realized.

For example, as shown in FIGS. 5 and 6, when the positioning plate 31 is perpendicular to the locking plate 32 and the two positioning plates 31 extend in opposite directions from the locking plate 32, if the two positioning plates 31 have the same shape, after the locking piece 30 is rotated 180 degrees around the axis passing through the center of the locking plate 32 and extending along the length direction of the locking plate 32, the configuration is the same as that before the rotation, so that the mounting of the locking piece 30 can also be realized.

According to some embodiments of the present application, as shown in FIG. 2, the shell 20 includes two shell plates 21 and a connecting plate 22 connecting the two shell plates 21. The latch plate channel 20a is formed at the inner sides of the two shell plates 21 and the connecting plate 22. The two shell plates 21 are respectively provided with a limiting groove 21a passing through the shell plate 21 along the thickness direction. The locking plate 32 is rotatablely fitted in the limiting groove 21a. The locking piece 30 passes through the two limiting grooves 21a, and the inner surfaces of the two positioning plates 31 are respectively in sliding fit with the outer surfaces of the two shell plates 21.

Illustratively, the shell 20 is constructed as a U-shaped structure in cross-section, and the shell plates 21 on both sides are connected by connecting plates 22 which, together with the shell plates 21 on both sides, define a latch plate channel 20a for inserting the latch plate 10. Referring to FIGS. 1 and 3, the locking piece 30 can move in the limiting groove 21a. When the latch plate 10 is inserted into the shell 20, the latch plate 10 slides on the connecting plate 22. When the latch plate 10 is fully inserted, the locking plate 32 of the locking piece 30 can be engaged with the snap-fit notch 10a, so that the locking piece 30 is located at the locking position and locks the seat belt 70.

In some embodiments, the shell 20 is formed by bending a sheet metal.

According to some embodiments of the present application, as shown in FIGS. 1-2, the limiting groove 21a is a fan-shaped groove. Referring to FIG. 3, two ends of the locking plate 32 are respectively fitted with the arc-shaped edges of the two limiting grooves 21a, to limit the moving range of the locking piece 30. Since the positioning plates 31 are disposed on both sides of the locking piece 30, the positioning plates 31 are always in sliding contact with the shell plates 21 on both sides during the movement of the locking piece 30, so as to ensure that the locking piece 30 does not tilt laterally during the movement.

Specifically, the positioning plate 31 is configured such that, during the movement of the locking piece 30, the orthographic projections of the two positioning plates 31 on the shell plate 21 do not completely fall into the limiting groove 21a, that is, the orthographic projections of the positioning plate 31 and the solid portion of the shell plate 21 always have an overlapping area, so that the two positioning plates 31 are always in sliding contact with the two shell plates 21, thereby ensuring that the locking piece 30 does not tilt laterally during movement.

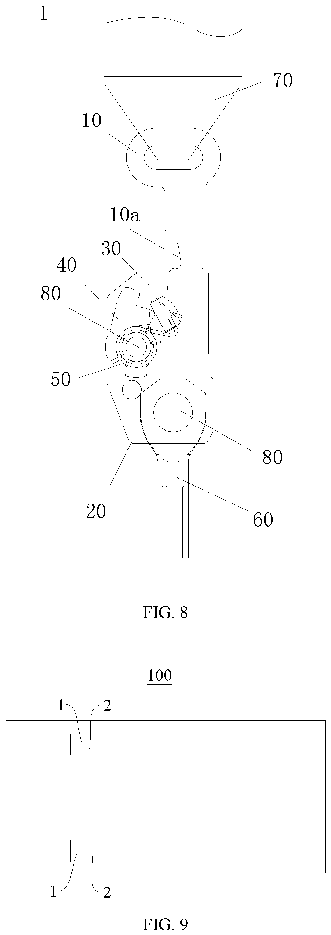

According to some embodiments of the present application, as shown in FIG. 1, the seat belt end closing device 1 further includes a safety piece 40. The safety piece 40 is provided with a stopping groove 40a, and the safety piece 40 is rotatablely provided on the shell 20 between a stopping position and an avoiding position. When the safety piece 40 is in the avoiding position (e.g., the position shown in FIG. 8), the locking piece 30 is disengaged from the stopping groove 40a to allow the locking piece 30 to move. When the safety piece 40 is in the stopping position (e.g., the position shown in FIG. 7), the locking piece 30 is fitted in the stopping groove 40a to prevent the locking piece 30 from moving. When the seat belt 70 is removed, the safety piece 40 is rotated by a certain angle to be disengaged from the locking piece 30, and then the locking piece 30 is moved in the limiting groove 21a. When the locking piece 30 is moved to a certain angle, the locking plate 32 of the locking piece 30 is moved out of the snap-fit notch 10a, and the latch plate 10 can slide out of the latch plate channel 20a, thereby completing the unlocking of the seat belt 70.

According to some embodiments of the present application, as shown in FIG. 1, the seat belt end closing device 1 further includes an elastic piece 50. The elastic piece 50 is deformable between a compression state and a reset state, and the elastic piece 50 is connected to the safety piece 40. The elastic piece 50 abuts against the locking piece 30 in the reset state (e.g., the state shown in FIG. 8) to drive the safety piece 40 to move to the avoiding position, and the elastic piece 50 always drives the safety piece 40 to rotate to the stopping position in the compression state (e.g., the state shown in FIG. 7). The elastic piece 50 is pressed by the latch plate 10 to a compression state (e.g., the state shown in FIG. 7) after the latch plate 10 is inserted into the latch plate channel 20a, and is restored to a reset state (e.g., the state shown in FIG. 8) after the latch plate 10 is disengaged from the latch plate channel 20a.

Illustratively, the elastic piece 50 may be configured as a torsion spring. The elastic piece 50 and the safety piece 40 are fixed to the shell 20. One end of the elastic piece 50 is fixed to the safety piece 40, and the other end of the elastic piece 50 is in contact with the locking piece 30. When the latch plate 10 is inserted into the latch plate channel 20a, the latch plate 10 compresses the other end of the elastic piece 50 during the insertion process, so that the other end of the elastic piece 50 is disengaged from the locking piece 30, and the latch plate 10 pushes the locking piece 30 to move in the limiting groove 21a so as to prevent the locking piece 30 from interfering with the insertion of the latch plate 10. When the insertion depth of the latch plate 10 reaches that the snap-fit notch 10a of the latch plate 10 is opposite to the locking plate 32, the locking piece 30 can reversely move under the action of the elastic piece 50 and the safety piece 40 until the locking piece 30 stops moving after entering the snap-fit notch 10a.

When the seat belt 70 is disassembled, the latch plate 10 can be continuously applied with force along the insertion direction F1 of the latch plate 10, so that the latch plate 10 overcomes the elastic force of the elastic piece 50, and the force between the locking plate 32 and the snap-fit notch 10a is reduced or removed. Thereafter, an external force may be applied to the safety piece 40 to rotate the safety piece 40 by a certain angle against the elastic force of the elastic piece 50 to cause the stopping groove 40a of the safety piece 40 to be disengaged from the locking piece 30. After that, an external force can be applied to the locking piece 30, so that the locking piece 30 can rotate in the limiting groove 21a and be disengaged from the engaging groove 10a of the latch plate 10. Thereafter, the force applied to the latch plate 10 in the insertion direction F1 is removed, and the latch plate 10 can be slid out from the latch plate channel 20a against the insertion direction F1 of the latch plate 10 under the action of the elastic piece 50, thereby completing the unlocking of the seat belt 70.

According to some embodiments of the present application, as shown in FIGS. 3 and 4, the positioning plate 31 has a length of 8-14 mm and a width of 8-14 mm. In order to ensure the positioning effect of the locking piece 30, the positioning plate 31 has a length of 8-14 mm and a width of 8-14 mm, so that the positioning plate 31 has a sufficient area. Illustratively, the length and width of the positioning plate 31 are both 11 mm.

According to some embodiments of the present application, as shown in FIGS. 1 and 9, the seat belt end closing device 1 further includes a connecting piece 60. The connecting piece 60 is provided on the shell 20 and is adapted to being connected to the seat belt tensioner 2. Illustratively, the connecting piece 60 is fixed to the shell 20, and the exposed end of the connecting piece 60 is connected to the seat belt tensioner 2 to fix the seat belt end closing device 1 to the vehicle 100.

In some embodiments of the present application, as shown in FIGS. 1, 7 and 8, the seat belt end closing device 1 further includes a fastener 80 configured as a plurality. For example, one fastener 80 can fix the connecting piece 60 to the shell 20, and the other fastener 80 can fix the elastic piece 50 and the safety piece 40 to the shell 20. The fastener 80 is provided to stabilize the structure of the seat belt end closing device 1. Since the connecting piece 60, the elastic piece 50 and the safety piece 40 are all fixed to the shell 20 by the fastener 80, the connecting piece 60, the elastic piece 50 and the safety piece 40 are not easy to fall off when the seat belt end closing device 1 works, and the working stability of the seat belt end closing device 1 can be improved.

In some embodiments of the present application, as shown in FIG. 7, the seat belt 70 can be removed by means of an opening piece 90, which is in the form of a rod, to facilitate the unlocking action of the seat belt end closing device 1. The opening piece 90 may be configured in a plurality of configurations, and one opening piece 90 (e.g., the left opening piece 90 shown in FIG. 7) may first contact one end of the safety piece 40 to overcome the action of the elastic piece 50, so that the safety piece 40 rotates counterclockwise by a certain angle, and the other end of the safety piece 40 is disengaged from the locking piece 30. Then, another opening piece 90 (e.g., the right opening piece 90 shown in FIG. 7) is brought into contact with the positioning plate 31 of the locking piece 30, and the locking piece 30 rotates in the limiting groove 21a under the action of the opening piece 90. When the locking piece 30 is rotated to a certain angle, the locking piece 30 is disengaged from the snap-fit notch 10a of the latch plate 10, and thereafter, the latch plate 10 can be ejected from the shell 20 under the action of the elastic piece 50, thereby completing the unlocking action.

According to some embodiments of the present application, as shown in FIG. 3 and FIG. 7, one side surface of the positioning plate 31 away from the locking plate 32 includes a first slope segment 311 disposed obliquely to the surface of the locking plate 32 (i.e., the surface in the thickness direction). In the locking position, the angle a1 between the first slope segment 311 and the insertion direction F1 of the latch plate 10 is smaller than the angle a2 between the surface of the locking plate 32 and the insertion direction F1 of the latch plate 10. Therefore, when the positioning plate 31 is pushed to rotate by using the opening piece 90, the opening piece 90 can apply force to the first slope segment 311 of the positioning plate 31 more easily and effortlessly because the inclination angle of the first slope segment 311 relative to the insertion direction F1 is relatively small.

For example, as shown in FIG. 3, FIG. 4 and FIG. 7, the positioning plate 31 is configured in a shape gradually protruding from both ends toward the center, so that one side surface of the positioning plate 31 away from the locking plate 32 includes two slope segments symmetrically provided, wherein one slope segment is the first slope segment 311 and the other slope segment is a second slope segment 312, and the first slope segment 311 and the second slope segment 312 are symmetrical, so that the positioning plate 31 generally takes the shape of a triangle or an isosceles trapezoid. Thus, the volume, material and cost of the positioning plate 31 can be saved, and the mounting of the positioning plate 31 to the shell 20 is facilitated. Also, when the locking piece 30 shown in FIG. 3 is mounted to the shell 20 after rotating 180 degrees around the axis passing through the center of the locking plate 32 and extending along the thickness direction of the locking plate 32. In this case, the opening piece 90 can push the second slope segment 312 to realize unlocking.

In some embodiments of the present application, the seat belt end closing device 1 of the present application includes a latch plate 10, a shell 20, a locking piece 30, a safety piece 40, an elastic piece 50, a connecting piece 60, and a fastener 80. The shell 20 is constructed in a U-shaped structure in cross-section, and the shell plates 21 on both sides are connected by connecting plates 22 which, with the shell plates 21 on both sides, define a latch plate channel 20a for inserting the latch plate 10. The locking piece 30 is rotatablely mounted in the seat belt end closing device 1, and the locking piece 30 is movable along the limiting groove 21a by the elastic piece 50, and both ends of the locking plate 32 are respectively fitted with the two arc-shaped sides of the limiting groove 21a to define the moving range of the locking piece 30. The locking piece 30 is movable between a locking position and a release position of the U-shaped shell 20 to fix or release the seat belt 70, and is provided with two positioning plates 31 and a locking plate 32 connecting the two positioning plates 31. The latch plate 10 extends into the latch plate channel 20a to guide the seat belt 70 to be connected to the shell 20. The locking piece 30 can fit with the snap-fit notch 10a of the latch plate 10 to fix the seat belt 70 to the shell 20. The positioning plate 31 is perpendicular to the locking plate 32 and the two positioning plates 31 extend in the same direction from the locking plate 32. The elastic piece 50 and the safety piece 40 are fixed to the shell 20 by a fastener 80. One end of the elastic piece 50 is fixed to the safety piece 40, and the other end of the elastic piece 50 can contact the locking piece 30. The safety piece 40 is rotatablely fixed to the shell 20. The connecting piece 60 is fixed to the shell 20 by a further fastener 80, and the exposed end of the connecting piece 60 is connected to the seat belt tensioner 2 to fix the seat belt end closing device 1 to the vehicle 100.

As shown in FIGS. 7-8, when the latch plate 10 is inserted into the latch plate channel 20a, the latch plate 10 slides on the shell plate 21 of the U-shaped shell 20, and the latch plate 10 firstly contacts with the elastic piece 50 and compresses one end of the elastic piece 50, so that the elastic piece 50 moves on the plane of the locking piece 30 until the elastic piece 50 leaves the locking piece 30. At the same time, the locking member 30 rotates clockwise in the limiting groove 21a of the U-shaped shell 20. When the snap-fit notch 10a of the latch plate 10 enters the latch plate channel 20a and is opposite to the locking member 30, the locking member 30 starts to rotate counterclockwise under the action of the elastic member 50 and the safety member 40, until the locking piece 30 comes into contact with the snap-fit notch 10a of the latch plate 10 and stops rotating, At this time, the locking piece 30 and the latch plate 10 are stably connected together under the action of the elastic piece 50 and the safety piece 40, The locking action is complete. Since the positioning plates 31 are disposed on both sides of the locking piece 30, the locking piece 30 is always in sliding contact with the inner side surface of the shell 20 during the rotation of the locking piece 30, so that the locking piece 30 does not tilt laterally during rotation.

As shown in FIGS. 7 to 8, when the seat belt end closing device 1 is locked, an axial force (i.e., an acting force toward the insertion direction F1) is applied to the latch plate 10 to overcome the elastic force of the elastic piece 50, so that the interaction force between the snap-fit notch 10a of the latch plate 10 and the locking piece 30 is reduced or removed. Then, the safety piece 40 can be rotated counterclockwise for a certain angle through one opening piece 90 to overcome the elastic force of the elastic piece 50, so that the stopping groove 40a of the safety piece 40 is disengaged from the locking piece 30, and then the other opening piece 90 is brought into contact with the positioning plate 31 of the locking piece 30 to rotate the locking piece 30 in the limiting groove 21a of the U-shaped shell 20. When the locking piece 30 is rotated to a certain angle, the locking piece 30 is disengaged from the snap-fit notch 10a of the latch plate 10 (in the process, the interaction force between the snap-fit notch 10a and the locking piece 30 is reduced or removed due to the axial force exerted on the latch plate 10, so that a small force is used to push the opening piece 90 to cause the locking piece 30 to rotate out. Of course, if this axial force is not apply to that latch plate 10, but pushing the opening piece 90 with force may also cause the locking piece 30 to rotate out ). Thereafter, the axial force exerted on the latch plate 10 is released, and the latch plate 10 can be ejected from the latch plate channel 20a under the action of the elastic piece 50 to complete the unlocking action.

The seat belt end closing device 1 of the present application has a good positioning effect and is structurally stable.

A vehicle 100 according to the present application is briefly described below.

As shown in FIG. 9, the vehicle 100 according to the present application includes the seat belt end closing device 1 described in any one of the above embodiments. Since the vehicle 100 according to the present application is provided with the seat belt end closing device 1 of the above embodiment, the vehicle 100 has a good protection effect on a user, and has a stable overall structure, and can ensure safe use of the user.

To sum up, in the seat belt end closing device 1 of the present application, the locking piece 30 is designed as a structure in which two sides of the locking plate 32 are connected with the positioning plate 31, so that the contact area between the locking piece 30 and the shell 20 can be increased, so that the positioning effect of the locking piece 30 is better. In addition, the structure of the seat belt end closing device 1 is simple. The cost is low. The positioning effect of the seat belt 70 is good. The seat belt 70 is flexible, convenient and firm to install.

In the description of this specification, reference to the terms "one embodiment, " "some embodiments, " "an example, " "a particular example, " or "some examples, " or the like means that particular features, structures, materials, or characteristics described in connection with the embodiment or example are included in at least one embodiment or example herein. In this specification, schematic representations of the above terms do not necessarily refer to the same embodiment or example. Moreover, the particular features, structures, materials, or characteristics described may be combined in any suitable manner in any one or more embodiments or examples. Furthermore, various embodiments or examples described in this specification may be joined and combined by those skilled in the art. While embodiments of the present application have been shown and described above, the above embodiments may be varied, modified, replaced, and transformed.

## Claims

1. A seat belt end closing device, comprising:
a latch plate, provided with a snap-fit notch, the latch plate being adapted to connect to an end part of the seat belt;
a shell, defining therein a latch plate channel, the latch plate channel being adapted for the latch plate to extend into;
a locking piece, comprising two positioning plates and a locking plate connecting the two positioning plates, the locking piece being movably arranged on the shell between a locking position and a release position, the locking plate being snap-fitted in the snap-fit notch when the locking piece is in the locking position and the latch plate extends into the latch plate channel, the locking plate avoiding the latch plate when the locking piece is in the release position, the two positioning plates being in sliding fit with the shell.

2. The seat belt end closing device according to claim 1, wherein the positioning plates are perpendicular to the locking plate and the two positioning plates extend from the locking plate in a same direction.

3. The seat belt end closing device according to claim 1, wherein thepositioning plates are perpendicular to the locking plate and the two positioning plates extend from the locking plate in opposite directions.

4. The seat belt end closing device according to any one of claims 1-3, wherein a side surface of the positioning plate away from the locking plate comprises a first slope segment arranged obliquely to the surface of the locking plate, and in the locking position, the angle a1 between the first slope segment and the insertion direction of the latch plate is smaller than the angle a2 between the surface of the locking plate and the insertion direction of the latch plate.

5. The seat belt end closing device according to claim 4, wherein the positioning plate is configured in a shape gradually protruding from both ends toward a center, so that the side surface of the positioning plate away from the locking plate comprises two slope segments symmetrically arranged, wherein one of the slope segments is the first slope segment.

6. The seat belt end closing device according to any one of claims 1 to 5, wherein the two positioning plates have the same shape.

7. The seat belt end closing device according to any one of claims 1 to 6, wherein the shell comprises two shell plates and a connecting plate connecting the two shell plates, the latch plate channel is formed at the inner sides of the two shell plates and the connecting plate, each of the two shell plates is provided with a limiting groove penetrating through the shell plate along the thickness direction, the locking plate is rotatablely fitted in the limiting groove, the locking piece passes through the two limiting grooves, and the inner surfaces of the two positioning plates are respectively in sliding fit with the outer surfaces of the two shell plates.

8. The seat belt end closing device according to claim 7, wherein the positioning plates are configured to be always in sliding contact with the two shell plates during the movement of the locking piece.

9. The seat belt end closing device according to claim 8, wherein the limiting groove is a fan-shaped groove, and the locking plate is respectively fitted with the arc edges of the two limiting grooves.

10. The seat belt end closing device according to any one of claims 1 to 9, further comprising a safety piece, the safety piece being provided with a stopping groove, the safety piece being rotatablely provided on the shell between a stopping position and an avoiding position, the locking piece being disengaged from the stopping groove when the safety piece is in the avoiding position to allow the locking piece to move, and the locking piece being fitted in the stopping groove when the safety piece is in the stopping position to prevent the locking piece from moving.

11. The seat belt end closing device according to claim 10, further comprising an elastic piece, the elastic piece being deformable between a compression state and a reset state, the elastic piece being connected to the safety piece, the elastic piece abutting against the locking piece in the reset state to drive the safety piece to move to the avoiding position, the elastic piece always driving the safety piece to rotate to the stopping position in the compression state, the elastic piece being pressed to the compression state by the latch plate after the latch plate is inserted into the latch plate channel and being reset to the reset state after the latch plate is disengaged from the latch plate channel.

12. The seat belt end closing device according to any one of claims 1 to 11, wherein the positioning plate has a length of 8-14 mm and a width of 8-14 mm.

13. The seat belt end closing device according to any one of claims 1 to 12, further comprising a connecting piece arranging on the shell and being configured to connect to a seat belt tensioner.

14. A vehicle, comprising the seat belt end closing device according to any one of claims 1 to 13.
